# EUROPÄISCHE PATENTSCHRIFT

(11) **EP 1 870 314 B1**
(45) Veröffentlichungstag und Bekanntmachung des Hinweises auf die Patenterteilung: **01.12.2010**
(21) Anmeldenummer: 07012106.6
(22) Anmeldetag: 21.06.2007
(51) Int. Cl.: B62D 5/04, B62D 7/02

(54) **Elektrische Lenkeinheit für ein Flurförderfahrzeug**
Electric steering unit for an industrial truck
Unité de direction électrique pour un véhicule de manutention

(30) Priorität: 23.06.2006 DE 102006029283
(43) Veröffentlichungstag der Anmeldung: 26.12.2007
(73) Patentinhaber: Kordel Antriebstechnik GmbH, 48249 Dülmen (DE)
(72) Erfinder: Raue, Josef, 48249 Dülmen (DE)
(74) Vertreter: Demski, Siegfried

(56) Entgegenhaltungen:
- WO-A-2005/077695
- DE-U1-202005 020 635

## Beschreibung

Die Erfindung betrifft eine Lenkeinheit, insbesondere für ein Flurförderfahrzeuge, umfassend ein als Planetengetriebe ausgebildetes Lenkgetriebe mit wenigstens einer Getriebestufe und einem Lenkmotor, wobei das Lenkgetriebe in einem Gehäuse anordbar, mit dem Lenkmotor antreibbar und über einen Radträger mit einem Laufrad koppelbar ist, wobei zwischen der Getriebestufe und dem Radträger ein Drehkranzlager mit einem Drehkranzlagerinnenring und einem Drehkranzlageraußenring angeordnet ist.

Lenkeinheiten für Flurförderfahrzeuge bestehen in der Regel aus hydraulischen Lenkgetrieben. Hierbei wird in einem Lenkgetriebegehäuse eine Zahnstange, welche mit einem Ritzel verbunden ist, durch hydraulische Betätigung innerhalb des Lenkgehäuses längsverschieblich geführt. Das Ritzel selbst steht über eine Welle direkt mit einem Radträger in Verbindung oder ist mit diesem drehfest verbunden. Durch eine einseitige Druckbeaufschlagung des hydraulischen Lenkgetriebes besteht somit die Möglichkeit die Zahnstange innerhalb des Gehäuses zu verschieben, sodass diese Bewegung in eine Drehbewegung auf das Ritzel und damit auf das Laufrad übertragen werden kann.

Aus der deutschen Patentschrift DE 24 06 610 C2 ist beispielweise ein solches hydraulischen Lenkgetriebe bekannt, wobei die Zahnstange in einer Zylinderbuchse abdichtend gelagert ist und endseitig jeweils mit einem hydraulischen Medium beaufschlagt werden kann. Hierzu wird ein Hydraulikaggregat eingesetzt, welches über Anschlussleitungen mit dem Lenkgetriebegehäuse verbunden ist. Derartige hydraulische Lenkgetriebe entsprechen jedoch nicht mehr dem gewünschten Stand der Technik, da die Kunden über elektronische Hilfsmittel die jeweilige Position des Lenkgetriebes exakt ermitteln möchten.

Weitere Lenkgetriebe sind beispielweise aus dem US-Patent 4,986,387 entnehmbar, welches gegenüber der vorgenannten Ausführung über eine einseitig geführte Lenkstange beziehungsweise einseitig beaufschlagte Lenkstange verfügt. Das Prinzip der Lenkstange mit Ritzel, welches unmittelbar mit den lenkbaren Laufrad verbunden ist, weicht ansonsten von der vorherigen Gestaltung nur geringfügig ab, sodass auch die gleichen Einwände bei dieser Ausführungsform vorliegen. Sicherlich besteht die Möglichkeit über jeweilige Endschalter den maximalen Lenkausschlag zu ermitteln, jedoch ist es wünschenswert auch kleine Lenkausschläge zu erfassen, um beispielweise eine vollautomatische Steuerung durchführen zu können.

Die WO 2005/077695 A1 offenbart einen Lenk- und Radantrieb für ein Flurförderfahrzeug mit einem Fahrmotor, einem Fahrgetriebe und einer Lenkeinheit der gattungsgemäßen Art. Mittels des Fahrmotors und des Fahrgetriebes ist ein Laufrad antreibbar, während das Laufrad durch den Lenkmotor und dem Lenkgetriebe um eine Vertikalachse verschenkbar ist. Das Lenkgetriebe ist hierbei als mehrstufiges Planetengetriebe oder als Wolframgetriebe ausgebildet und besitzt in einem ersten Ausführungsbeispiel drei Getriebestufen. Innerhalb der Getriebestufen sind die Planetenräder angeordnet, welche jeweils drehbar mit einem Planetenträger verbunden sind, wobei das Planetenrad in eine Innenverzahnung eines Lagerinnenrings eines Drehkranzlagers eingreift. Dieser Lagerinnenring ist über Wälzkörper mit einem Lageraußenring verbunden, sodass sich der Lagerinnenring zum Verschwenken des Fahrgetriebes und somit des Laufrades relativ zu dem Lageraußenring um eine Vertikalachse drehen kann. Der Planetenlager ist dabei fest mit dem feststehenden Hohlrad verbunden, sodass die Planetenräder im Wesentlichen ortsfest gehalten werden.

Aus der DE 20 2005 020 635 U1 ist ein Antrieb für Flurförderfahrzeuge mit einem Lenkmotor, einem Lenkgetriebe, einem Antrieb und einem Fahrgetriebe bekannt. Bei dieser Lösung ist das Lenkgetriebe als Planetengetriebe ausgebildet, wobei der durch den Lenkmotor erzeugte Abtrieb über einen Drehkranzlager auf das Fahrgetriebe erfolgt, sodass dieses um eine Vertikalachse verschwenkbar ist.

Durch den relativ komplizierten Aufbau der Getriebestufen nach dem Stand der Technik entstehen deutlich erhöhte Herstellungskosten. Bei einer Reparatur eines Getriebes ist zudem ein erhöhter Aufwand erforderlich, wobei darüber hinaus aufgrund der Vielzahl von einzelnen Getriebekomponenten eine wesentlich höhere Reparaturanfälligkeit besteht.

Aus den vorgenannten Gründen liegt der vorliegenden Erfindung daher die Aufgabe zugrunde, unter Verzicht auf ein Hydraulikaggregat eine elektrische Lenkeinheit aufzuzeigen, welche mit höchster Genauigkeit eine Lenkbewegung ermöglicht und darüber hinaus die jeweilige Position der Laufräder zur Weiterleitung an vorhandene Steuerungsgeräte gewährleistet.

Erfingdungsgemäß ist vorgesehen, dass der Drehkranzlagerinnenring als Planetenträger der Getriebestufe ausgebildet ist. Weitere vorteilhafte Ausgestaltungen der Erfindung ergeben sich aus den Unteransprüchen.

Anstelle einer bisher bekannten hydraulischen Lenkeinheit wird eine grundsätzlich neue Vorgehensweise vorgeschlagen, und zwar die Verwendung einer Getriebestufe, welche unmittelbar mit einem Lenkmotor gekoppelt ist. Der Lenkmotor selbst kann beispietweise aus einem Elektromotor bestehen, jedoch ist es denkbar, dass andere Motorvarianten zum Einsatz kommen. Auf eine herkömmliche Zahnstangenlenkung wird hierbei gänzlich verzichtet und stattdessen eine Getriebekomponente dazu verwendet unmittelbar die Drehbewegung des lenkbaren Laufrades herbeizuführen. Hierdurch besteht der Vorteil, dass mit Hilfe des Lenkmotors und der Getriebestufe eine wesentlich exaktere Lenkposition angefahren werden kann und darüber hinaus kann durch einfache und preiswerte Sensoren der aktuelle Lenkausschlag ermittelt und somit eine Rückmeldung (Feedback) erreicht werden. Damit besteht die Möglichkeit für ein Flurförderfahrzeug eine direkte Kontrolle des jeweiligen Lenkwinkels in die Steuerungsfunktion einfließen zu lassen, sodass jederzeit eine Korrektur bereits durch das Steuerungsgerät durchgeführt werden kann oder aber entsprechend des vorgegebenen Lenkwinkels durch den Fahrer eine direkte Umsetzung in einen neuen Ausschlagwinkel des Laufrades vorzunehmen. Darüber hinaus ergibt sich der Vorteil, dass auf Hydraulikaggregate soweit diese nicht anderweitig verwendet werden, gänzlich verzichtet werden kann und eine vorhandene Betriebsspannung, die beispielweise zum Antrieb des Flurförderfahrzeuges vorgesehen ist, ebenso zur Steuerung der Lenkeinheit mit einem beispielweise elektrischen Lenkmotorverwendet werden kann.

In besonderer Ausgestaltung der vorliegenden Erfindung ist vorgesehen, dass der Drehkranzlagerinnenring gleichzeitig den Planetenträger der Getriebeausgangsstufe bildet. Hierdurch kann die Anzahl der Bauelemente erheblich reduziert werden und darüber hinaus erfolgt ein direkter und unmittelbarer Antrieb des Radträgers, ohne dass große Toleranzen bei der Lenkbewegung auftreten können.

Zur Herstellung einer kompakten Lenkeinheit ist hierbei insbesondere vorgesehen, dass die Getriebestufe und der Lenkmotor eine gemeinsame Symmetrieachse aufweisen, sodass die verwendete Baueinheit gegenüber herkömmlichen hydraulischen Lenkeinheiten wesentlich kompakter ausgeführt und der vorhandene Stauraum für andere Elemente des Fahrzeuges verwendet werden kann. Vorzugsweise wird ein Element der Getriebestufe als Planetengetriebe ausgebildet, wobei insbesondere ein ein- oder mehrstufiges Planetengetriebe zum Einsatz kommt. Hierdurch kann auch bei entsprechend hoher Drehzahl eine Lenkbewegung mit einem geringen Ausschlag bewirkt werden. Durch die Verwendung zumindest einer Getriebestufe kann vorzugsweise ein kleiner Lenkmotor verwendet werden, der über eine große Dynamik verfügt.

Zur Aufnahme eines elektrischen Lenkmotors besitzt das Gehäuse auf der Anschlussseite des Lenkmotors eine Aufnahme für ein Lager, welches zur Lagerung des Ankers des Lenkmotors vorgesehen ist, sowie eine topfförmige Schale an die das Gehäuse des Lenkmotors bündig angeflanscht werden kann. Der Lenkmotor sowie das Gehäuse der Lenkeinheit bilden somit die gewünschte kompakte Einheit, die wartungsfreundlich ausgebildet ist und darüber hinaus Ablagerungen von Schmutz etc. weitestgehend verhindert. Auf der der Antriebsseite gegenüberliegenden Seite ist das Gehäuse der Lenkeinheit glockenförmig ausgebildet und dient bereits zur Aufnahme der vorgesehenen Getriebestufe. Unterhalb der Getriebestufe ist ein Drehkranzlager vorgesehen, welches sich zwischen der Getriebestufe und einem Radträger befindet. Durch das Drehkranzlager können hohe Belastungen problemlos aufgenommen werden und trotzdem wird mit Hilfe eines elektrischen Lenkmotors und der verwendeten Getriebestufe eine leichte Drehbewegung zur Ausführung der Lenkbewegung gewährleistet. Das Gehäuse selbst ist auf der Getriebeseite mit dem Drehkranzlageraußenring direkt verbunden, vorzugsweise verschraubt, während der Radträger mit dem Drehkranzlagerinnenring verbunden, und zwar ebenfalls vorzugsweise verschraubt, ist. Alternativ kann der Drehkranzlagerinnenring und der Radträger einstückig ausgebildet sein. Die aufzunehmende Belastung, welche auf die Laufräder über die Radträger übertragen werden soll, wird somit ausschließlich von dem Drehkranzlager aufgenommen, welches zusätzlich neben der Befestigung mit der Getriebestufe mit dem Chassis des Fahrzeugs verbunden ist, sodass sämtliche Kräfte insbesondere die auftretenden Lastkräfte, beispielweise bei einem Gabelstapler, unmittelbar über das Drehkranzlager auf den Radträger und die Laufräder übertragen werden können. Der Drehkranzlageraußenring und -innenring bildet hierbei gleichzeitig den Abschluss des Gehäuses und zwar auf der Seite der Getriebestufe. Zur Aufnahme der hohen Lasten ist hierbei ferner vorgesehen, dass der Drehkranzlagerinnenring gegenüber dem Drehkranzlageraußenring durch mehrere Lagerelemente abgestützt ist, wobei im Weiteren zwischen Drehkranzlageraußenring und Radträger eine Dichtung angeordnet sein kann, damit das vorgesehene Getriebefett nicht aus dem Lenkgehäuse austreten kann.

Die Hohlräder des verwendeten Planetengetriebes sind hierbei drehfest mit dem Gehäuse verbunden und besitzen somit den Vorteil, dass sie zusätzlich durch das äußere Gehäuse abgestützt sind und auftretende Radialkräfte unmittelbar in das Gehäuse eingeleitet werden, während der Abtrieb über das Sonnenrad oder einen Planetenträger unmittelbar auf den Drehkranzlageännenring erfolgt. Der Radträger selbst ist zur Aufnahme mindestens eines vorzugsweise zweier Laufräder vorgesehen, welche über Lagerelemente gegenüber dem Radträger abgestützt sind, wobei die Laufräder als antriebslose, aber über den Radträger lenkbare Laufräder, ausgebildet sind.

Vorzugsweise wird eine Ausführungsvariante gewählt, bei der der Lenkmotor aus einem Elektromotor besteht, welcher symmetrisch zur Längsachse der Lenkeinheit angeordnet ist und ein Drehkranzlager verwendet, welches sich zwischen Lenkmotor und Radträger befindet, wobei der Drehkranzlagerinnenring gleichzeitig als Planetenträger der Getriebeausgangsstufe ausgebildet ist. Somit wird eine kompakt bauende Einheit geschaffen, welche aus wenigen Einzelteilen gefertigt werden kann und durch die Verwendung eines Drehkranzlagers in der Lage ist große Lastkräfte aufzunehmen, bei gleichzeitig äußerst sensibler Lenksteuerung.

Zur Überwachung des Lenkwinkels ist in besonderer Ausgestaltung der Erfindung vorgesehen, dass die Achsen des Planetenträgers eine Zahnradscheibe führen, so dass die Zahnradscheibe mit dem Planetenträger rotiert. Die Zahnradscheibe selbst beaufschlagt unmittelbar oder mittelbar über ein weiteres Zahnrad einen Drehwinkelgeber, welcher durch eine Maßverkörperung und Sensorelemente die Position des Drehkranzlagerinnenrings erfasst und somit den Lenkwinkel der Laufräder. Mit Hilfe des Drehwinkelgebers kann somit der angeschlossenen Elektronik übermittelt werden, welche Position die Laufräder aktuell einnehmen, sodass eine Nachregulierung erfolgen kann. Der Drehwinkelgeber ermöglicht somit eine exakte Steuerung der Laufräder und eine jederzeitige Kontrolle, um eventuelle Nachjustierungen bei einem vollautomatischen Betrieb zu ermöglichen. Zum Drehwinkelgeber gehört eine Maßverkörperung und zumindest ein Sensorelement, wobei die Maßverkörperung in der Regel aus einer Lochscheibe oder einer strukturierten magnetosensitiven Struktur besteht, sodass als Sensorelemente entweder Lichtschranken oder magnetische Halbleiter zum Beispiel GMR-Sensoren zum Einsatz kommen können. In einer bevorzugten Ausführungsvariante ist hierbei der Drehwinkelgeber unmittelbar seitlich neben dem Lenkmotor an das Gehäuse angeflanscht.

Unter Zugrundelegung der Einzelkomponenten wird somit erfindungsgemäß eine neuartige elektrische Lenkeinheit geschaffen, welche insbesondere für Flurförderfahrzeuge vorgesehen ist und zumindest ein Gehäuse mit Lenkgetriebe und wenigstens eine Getriebestufe umfasst, welche von einem elektrischen Lenkmotor antreibbar ist, wobei der Abtrieb über eine Getriebekomponente auf zumindest ein Laufrad erfolgt und wobei die Position des Laufrades durch einen Drehwinkelgeber jederzeit feststellbar ist. Der Drehwinkelgeber ist hierbei mit der Getriebeausgangsstufe in derart gekoppelt, dass jeder Lenkeinschlag unmittelbar durch den Drehwinkelgeber erfasst werden kann.

Der wesentliche Vorteil der vorliegenden Erfindung besteht darin, dass mit Hilfe eines elektrischen Lenkmotors und einer Getriebestufe eine äußerst feinfühlige Lenkbewegung ausgeführt werden kann, die unabhängig von Bauteiltoleranzen der herkömmlichen Zahnstangenlenkung ist und ferner ohne Einsatz eines Hydraulikaggregats verwendet werden kann. Vorzugsweise wird diese Lenkeinheit bei Flurförderfahrzeugen, beispielweise Gabelstaplern, eingesetzt, die bereits über eine entsprechende Bordspannung durch die vorhandenen Batterien verfügen und mit einem elektrischen Lenkmotor ausgestattet sind, sodass in Ergänzung des elektrischen Antriebes ebenfalls eine elektrische Lenkeinheit verwendet werden kann. Der wesentliche Vorteil der hierdurch erzielt werden kann, besteht ferner darin, dass eine sofortige Kontrolle des jeweiligen Lenkwinkels über einen Drehwinkelgeber möglich ist.

Die Erfindung wird im Weiteren anhand eines Ausführungsbeispiels nochmals erläutert.

Es zeigt
- Fig. 1: in einer teilweise geschnittenen Seitenansicht eine erfindungsgemäße Lenkeinheit,
- Fig. 2: in einer perspektivischen Ansicht ein Flurförderfahrzeug mit der erfindungsgemäßen Lenkeinheit und
- Fig. 3: eine geschnittene Ausschnittvergrößerung der Getriebestufe mit Drehwinkelgeber gemäß Figur 1.

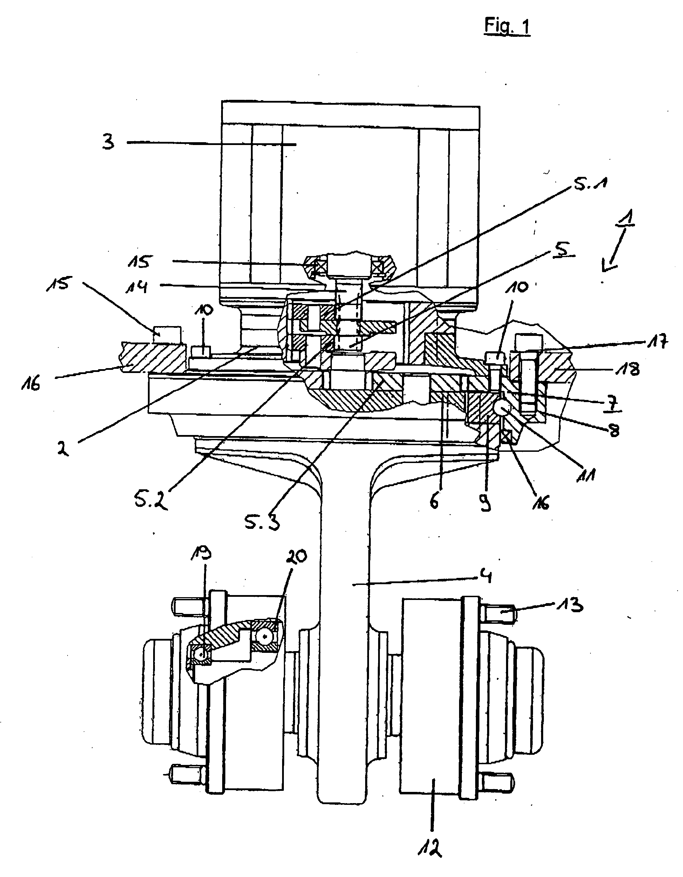

Figur 1 zeigt eine erfindungsgemäße Lenkeinheit 1, welches zum Antrieb eines nicht dargestellten Flurförderfahrzeuges verwendet werden kann. Die Lenkeinheit 1 besteht aus einem Gehäuse 2 sowie einem Lenkmotor 3 und ist mit einem angeflanschten Radträger 4 verbunden, welcher zur Aufnahme zweier nicht dargestellter Laufräder vorgesehen ist. Der Lenkmotor 3 ist unmittelbar an das Gehäuse 2 angeflanscht und mittels nicht dargestellter Befestigungsschrauben mit dem Gehäuse 2 verbunden. Die Abtriebswelle 14 des Lenkmotors 3 ist über Lagerelemente 15 abgestützt. Das Gehäuse 2 weist zu diesem Zweck auf der Motorseite eine schalenförmige Form auf, auf welche der Lenkmotor 3 mit Gehäuse aufgestülpt wird, sodass ein nahtloser Übergang erfolgt. Innerhalb des Gehäuses 2 ist im gezeigten Ausführungsbeispiel ein dreistufiges Planetengetriebe 5 eingebaut, welches zur Übertragung der Drehbewegung des Lenkmotors 3 auf eine Lenkbewegung des Radträgers 4 vorgesehen ist. Die einzelnen Planetenstufen 5.1, 5.2 und 5.3 sind ineinander verschachtelt innerhalb des Gehäuses 2 eingebaut, wobei die jeweiligen Hohlräder drehfest mit dem Gehäuse 2 verbunden sind. Ein Planetenträger 6 der dritten Stufe ist hierbei drehfest mit dem Radträger 4 verbunden und wird zum Abtrieb der Lenkbewegung verwendet. Der Radträger 4 ist mit dem Gehäuse 2 über ein Drehkranzlager 7 verbunden, das aus einem Drehkranzlageraußenring 8 und einem Drehkranzlagerinnenring 9 besteht. Der Drehkranzlageraußenring 8 ist hierbei mittels Schraubbolzen 10 mit dem Gehäuse 2 drehfest verbunden und über eine weitere Schraubverbindung 17 mit dem Fahrzeugrahmen 18, während der Drehkranzlagerinnenring 9 über Lagermittel 11 abgestützt und drehfest einerseits mit dem Radträger 4 und andererseits mit dem Planetenträger 6 verbunden ist. Zwischen Radträger 4 und somit auch Drehkranzlagerinnenring 9 und dem Drehkranzlageraußenring 8 ist zur Abdichtung der Getriebestufe ein Dichtungsring 16 vorgesehen, sodass die vorhandenen Gleitmittel, beispielweise Getriebefett, innerhalb der Getriebestufe nicht austreten können.

Der Radträger 4 ist im vorgesehenen Ausführungsbeispiel zur Aufnahme zweier Laufräder vorgesehen, welche jeweils auf einem Wellenstummel abgestützt werden. Auf den Wellenstumpf ist hierbei endseitig jeweils eine Radaufnahme 12 aufgesetzt, die wiederum über Lagermittel 19, 20 gegenüber dem Wellenstummel abgestützt sind und weist Befestigungsbolzen 13 auf, auf die das Laufrad aufgesetzt und verschraubt wird. Alternativ kann ein Radträger zur Aufnahme nur eines einzelnen Laufrades vorgesehen werden.

Die Besonderheit der vorliegenden Erfindung besteht darin, dass anstelle eines herkömmlichen hydraulischen Lenkgetriebes ein solches mit einem elektrischen Lenkmotor und eine Getriebestufe verwendet wird, wobei die hohe Drehzahl des Lenkmotors durch beispielweise ein 3-stufiges Planetengetriebe 5 insoweit herabgesetzt wird, dass der Drehkranzlagerinnenring 9, welcher unmittelbar mit dem Radträger 4 verbunden ist, eine langsame Drehbewegung ausführt, welche als Lenkbewegung für die Laufräder verwendet wird. Die ausgeführte Drehbewegung ist hierbei sehr präzise und mit geringen Toleranzen behaftet. Als besonderer Vorteil ist hierbei zu berücksichtigen, dass hohe Drehmomente übertragen werden können. Ferner kann die exakte Position durch entsprechende Sensoren ermittelt werden.

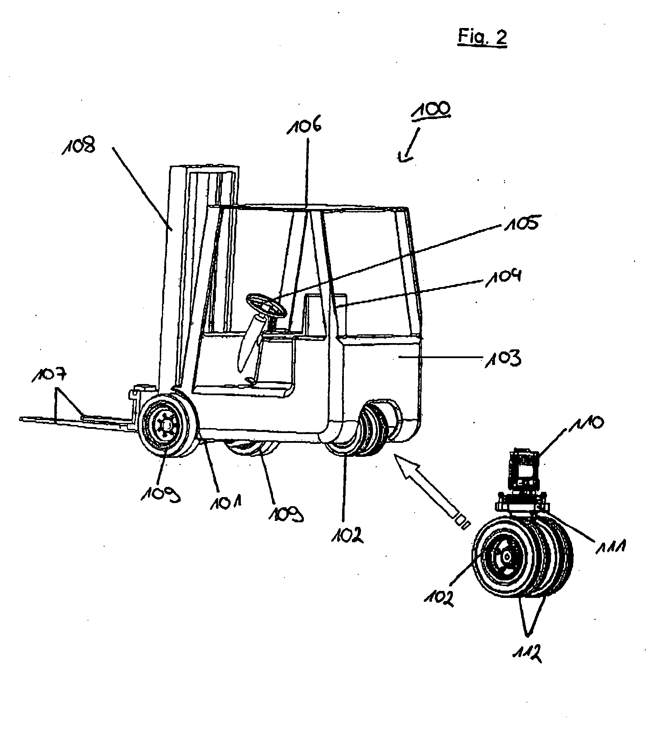

Figur 2 zeigt in einer perspektivischen rückwärtigen Ansicht ein Flurförderfahrzeug 100 mit einer vorderen Antriebswelle 101 und einer hinteren Lenkeinheit 102, welche nochmals in einer Einzeldarstellung der Figur 2 dargestellt ist. Das Flurförderfahrzeug 100 besitzt einen kastenförmigen Aufbau 103 mit einem Fahrersitz 104 und einer Lenkung 105, die unmittelbar auf die Lenkeinheit 102 einwirkt. Um den Fahrersitz 104 ist ein offenes Kabinendach 106 angeordnet, welches den Fahrer vor herabfallenden Gegenständen schützen soll. Das Flurförderfahrzeug 100 verfügt über zwei Gabeln 107 zum Anheben von Lasten, welche in einer Führung 108 nach oben verfahrbar angeordnet sind. Die vordere Achse 101 besitzt zwei Einzelräder 109, die jeweils einen nicht erkennbaren Antriebsmotor aufweisen. Die hintere Lenkeinheit 102 besitzt einen Lenkmotor 110 mit einem Gehäuse 111, welches die Getriebestufen und ein Drehkranzlager aufweist, damit die beiden Lenkräder 112 mit Hilfe des Lenkrades 105 in die jeweilige Position verfahren werden können. Einzelheiten der Lenkeinheit 102 sind der Figur 1 zu entnehmen.

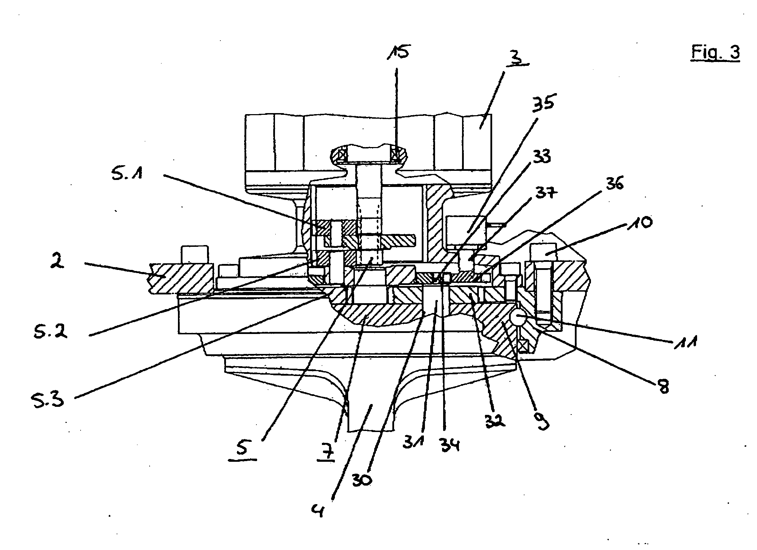

Figur 3 zeigt in einer geschnittenen Teilansicht das Planetengetriebe 5 mit den Planetenstufen 5.1, 5.2 und 5.3 und dem darüber befindlichen Lenkmotor 3. Der Drehkranzlagerinnenring 9 des Drehkranzlagers 7 bildet gleichzeitig den Planetenträger 6. Der Drehkranzlageraußenring 8 ist über Schraubbolzen 10 mit dem Gehäuse 2 verbunden. Der Planetenträger 6 beziehungsweise Drehkranzlagerinnenring 9 weist Bohrungen 30 auf, in welchen Planetenradachsen 31 für die Planeten 32 der letzten Planetenstufe 5.3 gelagert sind.

Die auf die Planetenradachsen 31 aufgesetzte Zahnradscheibe 34 liegt beispielweise auf einem Ansatz 33 auf und treibt ein Zahnradritzel 36, welches mit einer Maßverkörperung zur Ansteuerung eines Drehwinkelgebers 35 ausgestattet ist.

Die Ansteuerung kann hierbei unmittelbar über die Zahnradscheibe 34 erfolgen oder es besteht die Möglichkeit, wie im gezeigten Ausführungsbeispiel vorgegeben, über ein weiteres Zahnradritzel 36 den Drehwinkelgeber 35 anzusteuern. Die Zahnradscheibe 34 rotiert mit dem Planetenträger 6 mit, sodass mit Hilfe der Zahnradscheibe 34 und des Zahnradritzels 36 die jeweilige Position des Lenkwinkels der Laufräder 109 erfasst werden kann. Zu diesem Zweck ist der Drehwinkelgeber 35 mit Sensorelementen ausgestattet, hierbei kann es sich beispielweise um magnetosensitive Sensorelemente handeln, die durch eine Maßverkörperung, beispielweise eine modulierte Verzahnung, angesteuert werden und somit einen absoluten Wert des Drehwinkels erfassen können. Alternativ besteht die Möglichkeit eine Lochscheibe mit Durchlichtschranken oder gegebenenfalls mit Reflexionslichtschranken zu verwenden. Der Drehwinkelgeber 35 ist hierbei seitlich am Gehäuse 2 angeflanscht und ragt durch eine Bohrung 37 hindurch in das Gehäuse 2, sodass eine Kopplung mit dem Zahnradritzel 36 erfolgen kann.

### Bezugszeichenliste

- 1: Lenkeinheit
- 2: Gehäuse
- 3: Lenkmotor
- 4: Radträger
- 5: Planetengetriebe
- 5.1: Planetenstufe
- 5.2: Planetenstufe
- 5.3: Planetenstufe
- 6: Planetenträger
- 7: Drehkranzlager
- 8: Drehkranzlageraußenring
- 9: Drehkranzlagerinnenring
- 10: Schraubbolzen
- 11: Lagermittel
- 12: Radaufnahme
- 13: Befestigungsbolzen
- 19: Lagermittel
- 20: Lagermittel
- 30: Bohrung
- 31: Planetenradachse
- 32: Planet
- 33: Ansatz
- 34: Zahnradscheibe
- 35: Drehwinkelgeber
- 36: Zahnradritzel
- 37: Bohrung
- 100: Flurförderfahrzeug
- 101: Antriebswelle
- 102: Lenkeinheit
- 103: Aufbau
- 104: Fahrersitz
- 105: Lenkung
- 106: Kabinendach
- 107: Gabel
- 108: Führung
- 109: Laufrad
- 110: Lenkmotor
- 111: Gehäuse
- 112: Lenkrad

## Patentansprüche

1. Lenkeinheit (1), insbesondere für ein Flurförderfahrzeuge (100), umfassend ein als Planetengetriebe ausgebildetes Lenkgetriebe mit wenigstens einer Getriebestufe und einem Lenkmotor (3), wobei das Lenkgetriebe in einem Gehäuse (2) anordbar, mit dem Lenkmotor (3) antreibbar und über einen Radträger (4) mit einem Laufrad (112) koppelbar ist, wobei zwischen der Getriebestufe (5) und dem Radträger (4) ein Drehkranzlager (7) mit einem Drehkranzlagerinnenring (9) und einem Drehkranzlageraußenring (8) angeordnet ist,
**dadurch gekennzeichnet,**
**dass** der Drehkranzlagerinnenring (9) als Planetenträger (6) der Getriebestufe ausgebildet ist.

2. Lenkeinheit (1) nach Anspruch 1,
**dadurch gekennzeichnet,**
**dass** die Getriebestufe (5) und der Lenkmotor (3) eine gemeinsame Symmetrieachse aufweisen.

3. Lenkeinheit (1) nach Anspruch 1 oder 2,
**dadurch gekennzeichnet,**
**dass** als Getriebestufe (5) ein Planetengetriebe, vorzugsweise ein ein- oder mehrstufiges Planetengetriebe (5.1, 5.2, 5.3), vorgesehen ist.

4. Lenkeinheit nach einem der Ansprüche 1, 2 oder 3,
**dadurch gekennzeichnet,**
**dass** das Gehäuse (2) auf der Anschlussseite des Lenkmotors (3) eine topfförmige Schale aufweist, an die das Gehäuse des Lenkmotors (3) angeflanscht ist und/oder dass das Gehäuse (2) auf der dem Lenkmotor (3) gegenüberliegenden Seite glockenförmig zur Aufnahme der Getriebestufe (5) ausgebildet ist.

5. Lenkeinheit (1) nach einem der Ansprüche 1 bis 4,
**dadurch gekennzeichnet,**
**dass** das Gehäuse (2) auf der Getriebeseite mit einem Drehkranzlageraußenring (8) verbunden, vorzugsweise verschraubt, ist.

6. Lenkeinheit (1) nach Anspruch 5,
**dadurch gekennzeichnet,**
**dass** der Radträger (4) drehfest mit dem Drehkranzlagerinnenring (9) ausgebildet ist oder dass der Radträger und der Drehkranzlagerinnenring (9) einstückig ausgebildet sind.

7. Lenkeinheit (1) nach einem der Ansprüche 1 bis 6,
**dadurch gekennzeichnet,**
**dass** der Drehkranzlagerinnenring (9) gegenüber dem Drehkranzlageraußenring (8) durch mehrere Lagerelemente (11) abgestützt ist und/oder dass zwischen Radträger (4) und somit Drehkranzlagerinnenring (9) und Drehkranzlageraußenring (8) eine Dichtung (16) angeordnet ist.

8. Lenkeinheit (1) nach einem der Ansprüche 1 bis 7,
**dadurch gekennzeichnet,**
**dass** der Drehkranzlageraußen- (8) und Drehkranzlagerinnenring (9) den Abschluss des Gehäuses (2) bilden.

9. Lenkeinheit (1) nach einem der Ansprüche 1 bis 8,
**dadurch gekennzeichnet,**
**dass** die Hohlräder des Planetengetriebes (5) mit dem Gehäuse (2) drehfest verbunden sind und der Abtrieb über das Sonnenrad oder einen Planetenträger (6) unmittelbar auf den Drehkranzlagerinnenring (9) erfolgt.

10. Lenkeinheit (1) nach einem der Ansprüche 1 bis 9,
**dadurch gekennzeichnet,**
**dass** der Radträger (4) zur Aufnahme eines oder zweier Laufräder (112) vorgesehen ist, welche über Lagerelemente (19, 20) gegenüber dem Radträger (4) abgestützt sind und/oder dass die Laufräder (112) als antriebslose, aber lenkbare, Laufräder (112) ausgebildet sind.

11. Lenkeinheit (1) nach einem der Ansprüche 1 bis 10,
**dadurch gekennzeichnet,**
**dass** der Lenkmotor (3) aus einem Elektromotor besteht, weicher symmetrisch zur Lenkachse der Lenkeinheit angeordnet ist.

12. Lenkeinheit (1) nach einem der Ansprüche 1 bis 11,
**dadurch gekennzeichnet,**
**dass** die Achsen (31) des Planetenträgers (6) für die einzelnen Planeten (32) zur Aufnahme einer Zahnradscheibe (34) vorgesehen sind und/oder dass die Zahnradscheibe (34) zumindest auf einer, vorzugsweise auf sämtlichen Achsen (31) ruht und somit mit dem Planetenträger (6) rotiert.

13. Lenkeinheit (1) nach Anspruch 12,
**dadurch gekennzeichnet,**
**dass** die Zahnradscheibe (34) unmittelbar oder mittelbar über ein Zahnrad (36) einen Drehwinkelgeber (35) beaufschlagt, welcher durch eine Maßverkörperung und Sensorelemente die Position des Drehkranzlagerinnenrings (9) erfasst.

14. Lenkeinheit (1) nach Anspruch 13,
**dadurch gekennzeichnet,**
**dass** der Drehwinkelgeber (35) seitlich neben dem Lenkmotor (3) an das Gehäuse angeflanscht ist.

15. Lenkeinheit (1) nach Anspruch 14,
**dadurch gekennzeichnet,**
**dass** der Drehwinkelgeber (35) mit der Getriebeausgangsstufe (53) gekoppelt ist.

## Claims

1. Steering unit (1), in particular for industrial trucks (100), comprising a steering gear embodied as planetary gearing having at least one gear stage and a steering motor (3), wherein the steering gear can be arranged in a housing (2), and can be driven with the steering motor (3) and coupled to a running wheel (112) via a wheel carrier (4), wherein a slewing ring bearing with a slewing ring bearing internal race (9) and a slewing ring bearing external race (8) is arranged between the gear stage (5) and the wheel carrier (4),
**characterized in that**
the slewing ring bearing internal race (9) is embodied as pinion cage (6) of the gear stage.

2. Steering unit (1) according to claim 1,
**characterized in that**
the gear stage (5) and the steering motor (3) comprise a common axis of symmetry.

3. Steering unit (1) according to claim 1 or 2,
**characterized in that**
a planetary gearing, preferably a one- or multi-stage planetary gearing (5.1, 5.2, 5.3) is provided as gear stage (5).

4. Steering unit according to one of claims 1, 2 or 3,
**characterized in that**
the housing (2) comprises a cup-shaped bowl on the connection side of the steering motor (3) to which the housing of the steering motor (3) is flanged, and/or the housing (2) is embodied like a bell on the side opposite to the steering motor (3) to receive the gear stage (5).

5. Steering unit (1) according to one of claims 1 to 4,
**characterized in that**
the housing (2) is connected, preferably screwed to a slewing ring bearing external race (8) on the side of the gear.

6. Steering unit (1) according to claim 5,
**characterized in that**
the wheel carrier (4) is embodied to be stationary with the slewing ring bearing internal race (9), or the wheel carrier and the slewing ring bearing internal race (9) are embodied integrally.

7. Steering unit (1) according to one of claims 1 to 6,
**characterized in that**
the slewing ring bearing internal race (9) is supported with respect to the slewing ring bearing external race (8) by several bearing elements (11), and/or a seal (16) is arranged between the wheel carrier (4) and thus the slewing ring bearing internal race (9) and the slewing ring bearing external race (8).

8. Steering unit (1) according to one of claims 1 to 7,
**characterized in that**
the slewing ring bearing external race (8) and the slewing ring bearing internal race (9) form the ending of the housing (2).

9. Steering unit (1) according to one of claims 1 to 8,
**characterized in that**
the ring gears of the planetary gearing (5) are stationarily connected to the housing (2), and power take-off is effected via the sun wheel or a pinion cage (6) directly onto the slewing ring bearing internal race (9).

10. Steering unit (1) according to one of claims 1 to 9,
**characterized in that**
the wheel carrier (4) is provided for receiving one or two running wheels (112) which are supported with respect to the wheel carrier (4) via bearing elements (19, 20), and/or the running wheels (112) are embodied as running wheels (112) without drive, but steerable.

11. Steering unit (1) according to one of claims 1 to 10,
**characterized in that**
the steering motor (3) consists of an electric motor which is arranged symmetrically to the steering axle of the steering unit.

12. Steering unit (1) according to one of claims 1 to 11,
**characterized in that**
the axles (31) of the pinion cage (6) for the individual planets (32) are provided for receiving a crown gear (34), and/or the crown gear (34) rests on at least one, preferably on all axles (31) and thus rotates with the pinion cage (6).

13. Steering unit (1) according to claim 12,
**characterized in that**
the crown gear (34) acts directly or indirectly on a rotary encoder (35) via a gearwheel (36), the rotary encoder (35) detecting the position of the slewing ring bearing internal race (9) by a measurement standard and sensor elements.

14. Steering unit (1) according to claim 13,
**characterized in that**
the rotary encoder (35) is flanged to the housing laterally next to the steering motor (3).

15. Steering unit (1) according to claim 14,
**characterized in that**
the rotary encoder (35) is coupled with the gear output stage (53).

## Revendications

1. Unité de direction (1), en particulier pour un convoyeur au sol (100), comprenant un mécanisme de direction conçu sous forme d'engrenage planétaire et doté d'au moins un étage de transmission et un moteur de direction (3), le mécanisme de direction pouvant être disposé dans un carter (2), pouvant être entraîné par le moteur de direction (3) et pouvant être accouplé à une roue mobile (112) via un support de roue (4), un palier de couronne orientable (7) doté d'une bague intérieure de palier de couronne orientable (9) et d'une bague extérieure de palier de couronne orientable (8) étant disposé entre l'étage de transmission (5) et le support de roue (4), **caractérisée en ce que** la bague intérieure de palier de couronne orientable (9) est conçue sous forme de porte-satellites (6) de l'étage de transmission.

2. Unité de direction (1) selon la revendication 1, **caractérisée en ce que** l'étage de transmission (5) et le moteur de direction (3) présentent un axe de symétrie commun.

3. Unité de direction (1) selon la revendication 1 ou 2, **caractérisée en ce qu'**un engrenage planétaire, de préférence un engrenage planétaire simple ou à plusieurs étages (5.1, 5.2, 5.3) est prévu comme étage de transmission (5).

4. Unité de direction selon l'une des revendications 1, 2 ou 3, **caractérisée en ce que** le carter (2) présente côté raccordement du moteur de direction (3) une coque en forme de pot à laquelle le carter du moteur de direction (3) est fixée par bride et/ou **en ce que** le carter (2) est, du côté opposé au moteur de direction (3), conçu en forme de cloche pour recevoir l'étage de transmission (5).

5. Unité de direction (1) selon l'une des revendications 1 à 4, **caractérisée en ce que** le carter (2) est relié, de préférence vissé, à la bague extérieure de palier de couronne orientable (8) côté transmission.

6. Unité de direction (1) selon la revendication 5, **caractérisée en ce que** le support de roue (4) est conçu solidaire en rotation avec la bague intérieure de palier de couronne orientable (9) ou **en ce que** le support de roue et la bague intérieure de palier de couronne orientable (9) sont conçus d'un seul tenant.

7. Unité de direction (1) selon l'une des revendications 1 à 6, **caractérisée en ce que** la bague intérieure de palier de couronne orientable (9) est soutenu par plusieurs éléments de support (11) par rapport à la bague extérieure de palier de couronne orientable (8) et/ou **en ce qu'**un joint (16) est disposé entre le support de roue (4) et, par conséquent, la bague intérieure de palier de couronne orientable (9) et la bague extérieure de palier de couronne orientable (8).

8. Unité de direction (1) selon l'une des revendications 1 à 7, **caractérisée en ce que** la bague extérieure de palier de couronne orientable (8) et la bague intérieure de palier de couronne orientable (9) forment la terminaison du carter (2).

9. Unité de direction (1) selon l'une des revendications 1 à 8, **caractérisée en ce que** les couronnes de l'engrenage planétaire (5) sont reliées au carter (2) de façon solidaire en rotation et la prise de mouvement a lieu directement sur la bague intérieure de palier de couronne orientable (9) via la roue solaire ou un porte-satellites (6).

10. Unité de direction (1) selon l'une des revendications 1 à 9, **caractérisée en ce que** le support de roue (4) est prévu pour le logement d'une ou deux roues mobiles (112), lesquelles sont soutenues par des éléments de support (19, 20) par rapport au support de roue (4) et/ou **en ce que** les roues mobiles (112) sont réalisées sous forme de roues mobiles (112) non motrices, mais orientables.

11. Unité de direction (1) selon l'une des revendications 1 à 10, **caractérisée en ce que** le moteur de direction (3) est constitué d'un moteur électrique, qui est disposé symétriquement à l'essieu directeur de l'unité de direction.

12. Unité de direction (1) selon l'une des revendications 1 à 11, **caractérisée en ce que** les axes (31) du porte-satellites (6) pour les différents pignons satellites sont prévus pour le logement d'un disque de roue dentée (34) et/ou **en ce que** le disque de roue dentée (34) repose au moins sur un axe, de préférence sur tous les axes (31) et, par conséquent, tourne avec le porte-satellites (6).

13. Unité de direction (1) selon la revendication 12, **caractérisée en ce que** le disque de roue dentée (34) sollicite un transmetteur d'angle (35) directement ou indirectement via une roue dentée (36), le transmetteur enregistrant la position de la bague intérieure de palier de couronne orientable (9) par une mesure matérialisée et des éléments capteurs.

14. Unité de direction (1) selon la revendication 13, **caractérisée en ce que** le transmetteur d'angle (35) est fixé au carter par bride sur le côté du moteur de direction (3).

15. Unité de direction (1) selon la revendication 14, **caractérisée en ce que** le transmetteur d'angle (35) est accouplé à l'étage de sortie de la transmission (53).
